# EUROPÄISCHE PATENTANMELDUNG

(11) **EP 4 092 852 A1**
(43) Veröffentlichungstag der Anmeldung: **23.11.2022**
(21) Anmeldenummer: 22172840.5
(22) Anmeldetag: 11.05.2022
(51) Int. Cl.: H02G 3/08, H02G 3/12

(54) **INSTALLATIONSSYSTEM FÜR ELEKTROTECHNISCHE INSTALLATIONEN IN 3D-GEDRUCKTEN GEBÄUDEWÄNDEN UND VERFAHREN ZUM HERSTELLEN EINER 3D GEDRUCKTEN GEBÄUDEWAND MIT EINEM INSTALLATIONSSYSTEM**

(30) Priorität: 20.05.2021 DE 102021113114
(71) Anmelder: Kaiser GmbH & Co. KG, 58579 Schalksmühle (DE)
(72) Erfinder: Ritter, Mathias, 58553 Halver (DE); Schütze, Andreas, 45659 Recklinghausen (DE)
(74) Vertreter: Rentsch Partner AG

(57) **Zusammenfassung**

Die vorliegende Erfindung betrifft ein Installationssystem (1) umfassend eine Halterung (2) und eine in diese einsetzbare Installationsdose (3) für elektrotechnische Installationen in 3D-gedruckten Gebäudewänden sowie ein Verfahren zum Herstellen einer 3D gedruckten Gebäudewand mit einem Installationssystem (1). Die Halterung (2) weist hierbei einen um einen Aufnahmeraum (4) umlaufenden und im Wesentlichen in eine axiale Richtung erstreckenden Rahmen (5) auf. Der Rahmen umfasst eine Bodenplatte (6) und eine bezüglich dem Aufnahmeraum (4) dieser gegenüber angeordnete Deckplatte (7), sowie zwei zwischen der Bodenplatte (6) und der Deckplatte (7) verlaufende und den Aufnahmeraum (4) seitlich begrenzende Seitenplatten (8). Weiterhin weist die Halterung (2) mindestens eine Fussstruktur (9) auf, die dazu dient während der Herstellung der Gebäudewand die Halterung (2) bezüglich einer gedruckten Schicht der Gebäudewand zu positionieren.

## Beschreibung

3D Drucktechniken haben sich in den letzten Jahrzehnten massiv entwickelt. Neben zahlreichen anderen Anwendungen hat sich auch eine 3D-Drucktechnik für Gebäude entwickelt. Die modernen 3D Drucker sind hierbei dazu in der Lage pastöse Materialien, wie z.B. Beton, zu extrudieren und ermöglichen den Bau verschiedener mehr oder weniger komplexer Bauwerke. Die 3D Drucker ermöglichen hierbei eine freie Wahl der Form von Gebäudewänden bei einer schnelleren Herstellung zu geringeren Kosten. Auch erlaubt die Anwendung dieser Technologie einen optimierten Materialeinsatz, welcher zu einem nachhaltigeren und umweltfreundlicheren Bauen beiträgt.

In der Regel werden bei der Herstellung einer 3D gedruckten Gebäudewand zunächst zwei parallel verlaufende Wandungen gedruckt, die in regelmäßigen Abständen mittels Metallstäben zur Stabilisierung verbunden werden. Der zwischen den beiden Wandungen entstehende Hohlraum wird bei Aussenwänden mit einem Dämmmaterial ausgefüllt. Bei Innenwänden kann dieser hingegen später ausbetoniert (mit flüssigen Beton aufgefüllt) werden. Für die Montage von Elektroinstallationen in der Gebäudewand kann der 3D-Drucker so programmiert werden, dass dieser beim Herstellen, respektive Drucken, der einzelnen Druckschichten einer entsprechenden Gebäudewand Aussparungen berücksichtigt. In diesen können dann herkömmliche Installationsdosen z.B. mittels Bauschaum eingebracht werden. Eine derartige Befestigung der Installationsdosen hat jedoch den Nachteil, dass die Positionierung der Installationsdosen in der Gebäudewand ungenau ist. Überschüssiger Bauschaum verschmutzt ebenfalls häufig die Wandoberflächen, wenn dieser aus den Aussparungen herausquillt und muss nach dem Aushärten aufwändig entfernt werden. Weiterhin können die Installationsdosen aus dem Bauschaum und somit aus der Gebäudewand vorderseitig herausgedrückt werden, wenn der Hohlraum ausbetoniert wird.

Eine Aufgabe der Erfindung besteht darin ein verbessertes Installationssystem für elektrotechnische Installationen in 3D-gedruckten Gebäudewänden sowie ein Verfahren zum Herstellen einer 3D gedruckten Gebäudewand, welche ein solches Installationssystem beinhaltet, bereitzustellen.

Die Erfindung bezieht sich auf ein Installationssystem aus einer Halterung und einer in diese einsetzbare Installationsdose für elektrotechnische Installationen in 3D-gedruckten Gebäudewänden. Gebäudewände können hierbei z.B. Innenwände oder Aussenwände sein. Die Halterung des Installationssystems ist hierbei derart ausgelegt, dass diese in die zumindest bereichsweise bereits gedruckte Gebäudewand eingebracht werden kann und so die in einen Aufnahmeraum der Halterung einsetzbare Installationsdose in der Gebäudewand positionieren und verlässlich befestigen kann. Die Halterung umfasst hierzu einen um den Aufnahmeraum umlaufenden Rahmen. Der Rahmen erstreckt sich mit Vorteil von einem vorderseitigen Ende zu einem rückseitigen Ende in eine axiale Richtung. Der in dem Rahmen angeordnete Aufnahmeraum kann hierbei von einer vorderseitigen Rahmenöffnung und/oder einer rückseitigen Rahmenöffnung zugänglich sein. Als vorderseitig wird hierbei verstanden, dass diese Seite im eingebauten Zustand in der Gebäudewand zur Gebäudewandoberfläche hin angeordnet ist. Der Rahmen nimmt hierbei die Lasten der umliegenden gedruckten Schichten der Gebäudewand auf und schützt so die innenliegende Installationsdose z.B. vor dem Verformen. Der Rahmen umfasst eine Bodenplatte und eine bezüglich dem Aufnahmeraum dieser gegenüber angeordneten Deckplatte. Zwischen der Bodenplatte und der Deckplatte verlaufen je zwei bezüglich dem Aufnahmeraum gegenüber angeordnete Seitenplatten des Rahmens. Somit begrenzen diese den Aufnahmeraum seitlich. Die Seitenplatten können gerade oder gebogen sein. Mit Vorteil weist der Rahmen jedoch aus der axialen Richtung betrachtet eine rechteckige Form auf. Dies erleichtert das Einsetzen und Positionieren des Rahmens in der bereichsweise bereits gedruckten Gebäudewand. Nach dem Positionieren der Halterung kann dann die Installationsdose in die Halterung, bzw. in den Aufnahmeraum eingesetzt werden.

Die Halterung umfasst weiter eine Fussstruktur, die dazu dient (respektive dazu ausgelegt ist) während der Herstellung der Gebäudewand die Halterung bezüglich einer Druckschicht der Gebäudewand zu positionieren. Alternativ oder in Ergänzung kann die Fussstruktur dazu benutzt werden, die Halterung in der Druckschicht der Gebäudewand zu verankern. Die Fussstruktur kann an einer Aussenseite des Rahmens angeordnet sein, vorzugsweise jedoch an der Bodenplatte und/oder der Deckplatte. Die Fussstruktur ist dazu ausgelegt in das frisch gedruckte Material einer Druckschicht der Gebäudewand einzutauchen und die Halterung in der Gebäudewand zu positionieren und insbesondere dort zu fixieren. Hierzu kann die Fussstruktur mindestens eine erste Positionierrippe, welche zumindest bereichsweise normal zur axialen Richtung von dem Rahmen abragt, umfassen. Alternativ oder in Ergänzung kann die Fussstruktur mindestens eine weitere (zweite) Positionierrippe aufweisen, welche von der Halterung abragt, insbesondere im Wesentlichen senkrecht abragt, und sich in axialer Richtung erstreckt. Die erste und zweite Positionierrippe können sich zumindest bereichsweise schneiden. Beispielsweise können die erste und zweite Positionierrippe sich kreuzen, respektive gemeinsam ein Kreuz ausbilden. Weiterhin kann die zweite Positionierrippe von der ersten Positionierrippe T-förmig abragen oder vice versa. In anderen möglichen Ausgestaltungen kann die Fussstruktur eine um den Rahmen umlaufende Positionierrippe aufweisen oder durch eine strukturierte Aussenseite des Rahmens, insbesondere der Bodenplatte, ausgeformt werden. Die Aussenseite ist hierbei diejenige Seite des Rahmens, welche vom Aufnahmeraum wegzeigt.

Alternativ oder in Ergänzung kann die Halterung mindestens einen Flügel aufweisen, der derart ausgelegt ist, dass dieser zwischen zwei Druckschichten der Gebäudewand (insbesondere zwischen zwei Zwischenschichten wie nachfolgend beschrieben) angeordnet werden kann. Ein solcher Flügel kann beispielsweise seitlich von dem Rahmen abragen. D.h. der Flügel kann an der Aussenseite einer Seitenplatte angeordnet sein. Vorzugsweise weist jedoch jede der Seitenplatten je einen Flügel auf. Aus der axialen Richtung betrachtet hat der Flügel somit vorteilhafterweise eine flache Ausgestaltung. Aus einer Richtung senkrecht zur Bodenplatte oder zur Deckplatte des Rahmens gesehen, kann der Flügel einen U- oder O-förmigen Form aufweisen. Z.B. kann der Flügel einen Steg umfassen, welcher aus der Richtung senkrecht zur Bodenplatte gesehen eine U- oder O-förmigen Form aufweist. Der Flügel kann an der Seitenplatte angeformt oder mit dieser wirkverbunden sein.

Die in die Halterung einsetzbare Installationsdose weist in der Regel einen Dosenboden, eine in diesen übergehende Dosenwand, und eine dem Dosenboden gegenüberliegende und von der Dosenwand umgebende Installationsöffnung auf. Die Dosenwand umgibt hierbei eine Mittelachse der Installationsdose (folgend auch als axiale Richtung der Installationsdose bezeichnet). Mit Vorteil ist die Installationsdose in Richtung der Mittelachse in die Halterung einsetzbar, sodass die Mittelachse in die axiale Richtung der Halterung zeigt. Die axiale Richtung kann demnach im Folgenden für das Installationssystem (umfassend die Halterung und die Installationsdose) oder zur Beschreibung der jeweiligen separaten Halterung oder Installationsdose verwendet werden. Weiterhin kann die Installationsdose mindestens eine Einführöffnung zur Zuführung einer Installationsleitung aufweisen. Diese kann initial von einem heraustrennbaren Einführbereich der Installationsdose verschlossen sein. Die Einführöffnung, respektive der heraustrennbare Einführbereich, kann im Dosenboden und/oder in der Dosenwand angeordnet sein. Wenn ein Einführbereich in der Dosenwand angeordnet ist, ist es vorteilhaft, wenn ebenfalls der Rahmen, insbesondere die Bodenplatte und/oder die Deckplatte, eine entsprechend angeordnete Einführöffnung zur Durchführung der Installationsleitung aufweist. Auch diese kann initial von einem heraustrennbaren Einführbereich verschlossen sein. In einem eingesteckten Zustand der Installationsdose in der Halterung ist die mindestens eine Einführöffnung in der Dosenwand vorteilhafterweise koaxial zur einer entsprechenden Einführöffnung des Rahmens. Eine Einführöffnung der Installationsdose im Dosenboden kann hingegen durch die rückseitige Rahmenöffnung zugänglich sein.

Von der Dosenwand ragt mit Vorteil weiterhin ein Dosenkragen ab. Dieser kann die Installationsöffnung zumindest bereichsweise umgeben. Der Dosenkragen ist mit Vorteil dünnwandig. Mit Vorteil ist der Dosenkragen zu einem vorderseitigen Rand der Installationsdose, respektive der Dosenwand, beabstandet angeordnet. Der vorderseitige Rand umgibt hierbei die Installationsöffnung. Aus der axialen Richtung betrachtet entspricht eine Aussenkontur der Installationsdose, insbesondere eine Aussenkontur des Dosenkragens, mit Vorteil einer Innenkontur des Rahmens (Bodenplatte, Seitenplatten und Deckplatte). Der Dosenkragen kann in verschiedene Kragenbereiche unterteilt werden. Ein oder mehrere Kragenbereiche können sich im Wesentlichen in einer Ebene erstrecken. Alternativ oder in Ergänzung können ein oder mehrere Kragenbereiche ebenfalls winkelig zueinander angeordnet sein und/oder ineinander übergehen. Je nach Anwendung kann der Dosenkragen sich lediglich in einer Ebene, normal zur axialen Richtung erstrecken. Hierbei kann der Dosenkragen von einem einzigen die Dosenwand umgebenden Kragenbereich oder von mehreren voneinander beanstandeten und um die Dosenwand verteilt angeordneten Kragenbereichen geformt sein. Ebenfalls ist möglich, dass der Dosenkragen um die Dosenwand umlaufend ausgestaltet ist, jedoch durch mehrere aneinander anschliessende Kragenbereiche gebildet wird, welche winkelig zueinander angeordnet sind. In einer vorteilhaften Ausführung umfasst der Dosenkragen mindestens zwei Kragenbereiche, welche in Bezug zur Installationsöffnung gegenüberliegend voneinander angeordnet sind. Mit Vorteil sind diese in einer Ebene normal zur Mittelachse der Installationsdose (respektive zur axialen Richtung) angeordnet.

Die Halterung kann an einem vorderseitigen Ende eine Schottwand zur Auflage des Dosenkragens der Installationsdose aufweisen. Die Schottwand ist mit Vorteil derart gestaltet, dass diese zumindest bereichsweise entlang des Dosenkragens verläuft, sodass die Installationsdose mit dem Dosenkragen an dieser anliegt und in axialer Richtung positioniert wird. Die Schottwand kann hierbei in Bezug zu dem vorderseitigen Ende des Rahmens nach hinten versetzt angeordnet sein. Weiterhin weist die Schottwand eine Aufnahmeöffnung zum Einsetzen der Installationsdose auf. In einem eingesetzten Zustand der Installationsdose in der Halterung liegt vorzugsweise der Dosenkragen der Installationsdose an der Schottwand an. Die Aufnahmeöffnung umgibt dann die Dosenwand. Ergänzend kann zwischen der Halterung und der Installationsdose eine Dichtung angeordnet sein. Je nach Ausgestaltung kann mindestens eine Dichtung zwischen der Dosenwand und der Schottwand und/oder dem Dosenkragen und der Schottwand angeordnet sein. Die jeweiligen Dichtung(en) umlaufen mit Vorteil die Aufnahmeöffnung. Die Dichtung(en) kann jedoch ebenfalls integral an der Halterung und/oder der Installationsdose angeformt sein.

An der Halterung können weiter Befestigungsmittel vorgesehen sein, mittels denen die Installationsdose mit der Halterung wirkverbunden werden kann, insbesondere form-und/oder kraftschlüssig wirkverbunden werden kann. Je nach Ausgestaltung können die Befestigungsmittel Befestigungsöffnungen und in diese jeweils einbringbare Befestigungselemente (z.B. Schrauben, Einsätze oder Stifte) umfassen. Hierbei kann in der Schottwand mindestens eine (erste) Befestigungsöffnung angeordnet sein, welche in dem eingesetzten Zustand der Installationsdose in der Halterung mit einer entsprechenden (zweiten) Befestigungsöffnung am Dosenkragen koaxial angeordnet sind. Mit Vorteil sind mehrere erste Befestigungsöffnungen mit jeweils koaxialen zweiten Befestigungsöffnungen vorhanden. Ein jeweiliges Befestigungselement kann durch eine zweite Befestigungsöffnung in eine erste Befestigungsöffnung eingeführt werden und dort form-und/oder kraftschlüssig befestigt werden. Die erste Befestigungsöffnung kann durch die Schottwand durchgehend oder als Sackloch ausgestaltet sein. In einer Ausgestaltung kann rückseitig an der Schottwand jeweils ein Dom angeordnet sein, welcher die jeweilige erste Befestigungsöffnung bereichsweise umgibt und/oder rückseitig verschliesst.

Mit Vorzug ist die Installationsdose mit der Halterung derart wirkverbindbar ist, dass der vorderseitige Rand der Installationsdose in axialer Richtung bündig mit dem Rahmen, insbesondere dem vorderseitiges Ende des Rahmens, abschliesst oder über diesen hinausragt. Je nach Anwendung kann die Installationsdose mit der Halterung jedoch auch in mehreren Positionen wirkverbindbar sein. Mit Vorteil weist der vorderseitiger Rand der Installationsdose in den jeweiligen mehreren Positionen unterschiedliche Abstände zur Halterung, insbesondere zum vorderseitigen Ende des Rahmens, auf. Hierbei ist es besonders vorteilhaft, wenn in einigen der mehreren Positionen die Installationsdose in axialer Richtung jeweils mit unterschiedlichen Abständen über das vorderseitige Ende des Rahmens hinausragt. Auf diese Weise können verschiedene Dicken von Putzschichten auf die gedruckte Gebäudewand berücksichtigt werden und ein sauberer Abschluss der Installationsdose an der verputzen Gebäudewand erzieht werden. In diesem Fall kann die Dichtung, wenn vorhanden, derart ausgelegt sein, dass diese in axialer Richtung elastisch verformbar ist, sodass in allen Positionen der Installationsdose die Installationsdose dichtend an der Halterung anliegt.

Um mehrere Halterungen nebeneinander anzuordnen kann die Halterung Verbindungsstrukturen zum Verbinden einer baugleichen weiteren Halterung an der Halterung aufweisen. Die beiden baugleichen Halterungen können in einem wirkverbundenen Zustand mit den beiden jeweiligen Seitenplatten der beiden Halterungen aneinander anliegen. Die Verbindungsstrukturen sind mit Vorteil an einer Kante zwischen einer der beiden Seitenplatten und der Bodenplatte (vorzugsweise jedoch an beiden Kanten zwischen den jeweiligen Seitenplatten und der Bodenplatte) und /oder an einer Kante zwischen einer der beiden Seitenplatten und der Deckplatte (vorzugsweise jedoch an beiden Kante zwischen den jeweiligen Seitenplatten und der Deckplatte) angeordnet. An einer jeweiligen Kante kann mit Vorteil eine erste und eine zweite Verbindungsstruktur angeordnet sein, wobei die erste Verbindungsstruktur dazu ausgelegt ist mit einer zweiten Verbindungsstruktur einer weiteren baugleichen Halterung wirkverbindbar zu sein und vice versa. Auf diese Weise kann die Halterung seitlich (über die Seitenplatten) je mit einer baugleichen Halterung über Verbindungsstrukturen aneinandergereiht werden. Für eine gute Einbindung in der Gebäudewand kann es zudem vorteilhaft sein, wenn die Verbindungsstruktur(en) sich im Wesentlichen in axialer Richtung und in Richtung der Bodenplatte erstreckt, sodass diese in einem nicht wirkverbundenen Zustand der Halterung zwischen zwei Druckschichten der Gebäudewand angeordnet werden können.

Wenn mehrere Halterungen aneinandergereiht angeordnet sind, kann es vorteilhaftsein, diese derart miteinander zu verbinden, dass ein Durchgang von einem Installationsraum einer in die jeweiligen Halterungen eingesetzten Installationsdose zu der anderen eingesetzten Installationsdose zu ermöglichen. Auf diese Weise können die Elektroinstallationen miteinander verdrahtet werden. Je nach Anwendung kann hierzu in den jeweiligen Seitenplatten der Halterung ein entlang einer Dünnstelle heraustrennbarer Rahmenbereich vorgesehen sein. Mit Vorteil schliesst dieser an das vorderseitige Ende des Rahmens an. Weiterhin kann an einer entsprechenden Stelle der Dosenwand der Installationsdose ein entsprechender Bereich der Dosenwand entlang einer Dünnstelle herausgetrennt werden. Der heraustrennbare Bereich der Dosenwand grenzt mit Vorzug an die Installationsöffnung an. Der oben beschriebene Dosenkragen kann hierbei den heraustrennbaren Bereich der Dosenwand (Dosenbereich) bis zur Installationsöffnung bereichsweise umgeben.

Die Erfindung betrifft weiter ein Verfahren zum Herstellen einer 3D gedruckten Gebäudewand, welches (mindestens) ein Installationssystem für elektrotechnische Installationen beinhaltet. Das Installationssystem kann hierbei ein Installationssystem wie zuvor umschrieben sein. Das Verfahren umfasst die folgenden Verfahrensschritte: a. Bereitstellen des Installationssystems, umfassend eine Halterung und eine in einen Aufnahmeraum der Halterung einsetzbare Installationsdose; b. Drucken einer Basisschicht einer Gebäudewand; c. Positionieren einer Bodenplatte der Halterung auf der Basisschicht; d. Drucken einer Deckschicht der Gebäudewand, welche eine der Bodenplatte in Bezug zum Aufnahmeraum gegenüberliegende Deckplatte der Halterung überspannt; e. Einsetzen der Installationsdose in die Halterung; und f. Wirkverbinden der Installationsdose mit der Halterung. Mit Vorteil werden die Verfahrensschritte a. bis f. hierbei in der dargelegten Reihenfolge ausgeführt, jedoch sind auch andere Reihenfolgen denkbar. Als Druckmaterialien sind pastöse Materialien geeignet, wie z.B. Zement, Keramikmeische, Holzbeton, Beton, etc..

Je nach Anwendung kann die Basisschicht und/oder Deckschicht hierbei einen Ausschnitt für die Zuführung eines Elektroinstallationsrohrs in die Installationsdose aufweisen. Der Ausschnitt kann sich durch weitere Druckschichten der Gebäudewand erstrecken. Die weiteren Druckschichten können unterhalb der Basisschicht oder oberhalb der Deckschicht angeordnet sein. Zum Beispiel kann sich der Ausschnitt vertikal durch die Basisschicht und die darunterliegenden Druckschichten bis zum Boden der Gebäudewand erstrecken. Der Ausschnitt kann beim Drucken der jeweiligen Druckschichten vorgesehen werden oder nachträglich in die noch weichen Druckschichten eingebracht werden.

Zwischen der Basisschicht und der Deckschicht kann mindestens eine Zwischenschicht angeordnet sein / gedruckt werden. Die mindestens eine Zwischenschicht kann vor dem Positionieren der Bodenplatte der Halterung auf der Basisschicht gedruckt werden. Die eine Zwischenschicht oder die mehreren Zwischenschichten sehen dann eine Aussparung für die Halterung vor. Mit Vorteil weist die Aussparung eine Breite auf, welche der Breite des Rahmens einer Halterung entspricht. Werden jedoch mehrere wirkverbundene Halterungen in die Gebäudewand eingebaut, entspricht die Breite der Aussparung mit Vorzug der Breite der wirkverbundenen Rahmen der Halterungen. (Die Breite wird hierbei senkrecht zur axialen Richtung und entlang der Gebäudewandoberfläche gemessen.) Die Position der Aussparung und/oder der Halterung (z.B. einer Positionsmarke der Halterung) kann durch das Bereitstellen eines 3D-Druckmodells der herzustellenden Gebäudewand und/oder dem darin vorgesehenen Installationssystem vorgegeben sein. Alternativ kann ebenfalls auch erst die Halterung mit der Bodenplatte auf der Basisschicht positioniert werden und anschliessend kann die mindestens eine Zwischenschicht gedruckt werden. Unabhängig davon in welcher Reihenfolge die mindestens eine Zwischenschicht(en) hergestellt wird, ist es vorteilhaft, wenn diese bündig mit der Deckplatte der Halterung abschliesst. In dem Fall, dass die Zwischenschichten jeweils die gleiche Dicke haben, entspricht somit ein Vielfaches dieser Dicke einer Höhe der Seitenplatte der Halterung. Es jedoch ebenfalls möglich, dass die Schichtdicken derart angepasst werden, dass mindestens eine der mehreren Zwischenschichten dünner oder dicker als die anderen Zwischenschichten ist, sodass die zuletzt gedruckte Zwischenschicht bündig mit der Deckplatte der Halterung abschliesst. Die gedruckte Deckschicht überspannt somit die zuletzt gedruckte Zwischenschicht und die Deckplatte der Halterung.

Die Positionierung der Halterung auf der Basisschicht (und insbesondere in der Aussparung der mindestens einen Zwischenschicht) kann von einem Monteur oder durch eine robotische Positioniereinheit durchgeführt werden. Hierzu kann die Halterung eine Koppelstruktur aufweisen, welche dazu dient, dass die robotische Positioniereinheit die Halterung greifen und positionieren kann. Die robotische Positioniereinheit kann zum Wirkverbinden mit der Koppelstruktur der Halterung eine Gegen-Koppelstruktur aufweisen. Weiterhin kann das Positionieren der Bodenplatte auf der Basisschicht das Eintauchen einer auf der Bodenplatte angeordneten Fussstruktur in die Basisschicht umfassen um die Halterung in der Gebäudewand zu verankern.

Für manche Anwendung kann es zudem vorteilhaft sein, wenn die Halterung eine Positionsmarke umfasst. Das Verfahren (das Positionieren der Halterung auf der Basisschicht und/oder in der Aussparung) kann in diesem Fall den Verfahrensschritt der Kontrolle der Position der Positionsmarke umfassen. Ebenfalls kann das Verfahren die Justierung der Position der Halterung nach der Kontrolle umfassen. Die Kontrolle der Position der Positionsmarke kann durch einen Monteur oder eine robotische Einheit erfolgen.

Nach dem Einsetzen der Installationsdose in die Halterung und vor dem Wirkverbinden derselben mit der Halterung, kann die Installationsdose in normaler Richtung zu einer Oberfläche der gedruckten Gebäudewand verschoben, respektive justiert, werden. Dies hat den Vorteil, dass ein vorderseitiger Rand der Installationsdose bereits bündig zu einer nachträglich (später) auf die gedruckte Gebäudewand aufgebrachten Putzschicht ausgerichtet werden kann. Die Putzschicht wird in der Regel erst nach dem Anschliessen von mindestens einer Installationsleitung, insbesondere eines Installationsrohres, aufgebracht.

Nach dem Wirkverbinden der Installationsdose mit der Halterung kann das Verfahren weiter das Anschliessen mindestens einer Installationsleitung, insbesondere eines Installationsrohres an der Installationsdose, umfassen. Die Installationsleitung kann hierzu rückseitig durch eine rückseitige Rahmenöffnung der Halterung und durch die Einführöffnung der Installationsdose eingeführt werden. Anschliessend können die Elektroleitungen durch das Installationsrohr verlegt werden.

Für eine effiziente Installation kann das Installationssystem (Installationsdose und/oder Halterung) zudem einen Datenträger, z.B. in Form eines einlesbaren Barcodes oder eines RFID Chips, aufweisen. Das Verfahren kann somit weiter umfassen das Einlesen des Datenträgers und das Abrufen von hinterlegten Daten. Die hinterlegten Daten können hierbei Informationen über die vorgesehene Elektroinstallation (Steckdose, Lichtschalter, Glasfaserteilnehmeranschlüsse, etc. ), oder ähnliches beinhalten.

Je nach Konfiguration der geplanten Gebäudewand, können in dieser mindestens zwei Halterungen mit entsprechenden Installationsdosen vorgesehen werden. Diese können aneinander angrenzend (z.B. nebeneinander und/oder übereinander) und/oder an verschiedenen Positionen in der Gebäudewand angeordnet sein. Wenn diese aneinander angrenzend angeordnet sind, können die mindestens zwei Halterungen in einer (gemeinsamen) Aussparung der Gebäudewand angeordnet sein. Bei einer Anordnung nebeneinander, können die mindestens zwei Halterungen nebeneinander auf die Basisschicht aufgesetzt werden. Die Deckschicht überspannt dann beide Halterungen gemeinsam. Für eine einfache Montage können die Halterungen vor dem Aufsetzten auf der Basisschicht miteinander wirkverbunden werden, wie oben beschrieben. Bei einer Anordnung übereinander versteht sich, dass eine erste Halterung der mindestens zwei Halterungen auf der Basisschicht angeordnet wird, während eine zweite Halterung auf die Deckplatte der ersten Halterung aufgesetzt wird (etc.). Die Deckschicht der Gebäudewand überdeckt dann die gestapelten mindestens zwei Halterungen, wobei diese lediglich an der obersten der gestapelten Halterung anliegt. Wie oben beschrieben, kann die mindestens eine Zwischenschicht dann eine Aussparung vorsehen, in welche die wirkverbundenen Halterungen gemeinsam eingesetzt werden können.

Die beschriebenen Ausführungsformen des Installationssystems, respektive der Halterung und/oder der Installationsdose, können zur Ausführung des erfindungsgemässen Verfahrens dienen. Die zuvor beschriebenen Ausführungsformen des Verfahrens offenbaren zugleich entsprechend ausgestaltete Ausführungen des Installationssystems, respektive der Halterung und/oder der Installationsdose, zur Durchführung des Verfahrens. Im Kontext der vorliegenden Ausführungen sind die Basisschicht, die Deckschicht, die mindestens eine Zwischenschicht sowie die unter der Basisschicht und über der Deckschicht liegenden Schichten je als Druckschicht, respektive gedruckte Schichten zu verstehen. Die Basisschicht, die Deckschicht und die mindestens eine Zwischenschicht können hierbei Druckschichten einer Wandung einer Gebäudewand sein. Die Gebäudewand kann jedoch ergänzend eine zweite von der ersten Gebäudewand beanstandete und einen Hohlraum ausbildende Wandung aufweisen, wie einleitend beschrieben.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Ausführungsform eines Installationssystems gemäss der Erfindung in einer perspektivischen Ansicht;
- Fig. 2: Eine Halterung des Installationssystems gemäss Figur 1 in einer Ansicht von oben;
- Fig. 3: Eine Halterung des Installationssystems gemäss Figur 1 in einer vorderseitigen Ansicht;
- Fig. 4: Eine Installationsdose des Installationssystems gemäss Figur 1 in einer perspektivischen Ansicht von der Seite;
- Fig. 5: Eine zweite Ausführungsform eines Installationssystems gemäss der Erfindung in einer perspektivischen Ansicht von der Seite;
- Fig. 6: Eine schematische Darstellung eines Verfahrens zum Herstellen einer 3D gedruckten Gebäudewand, welche ein Installationssystem beinhaltet.

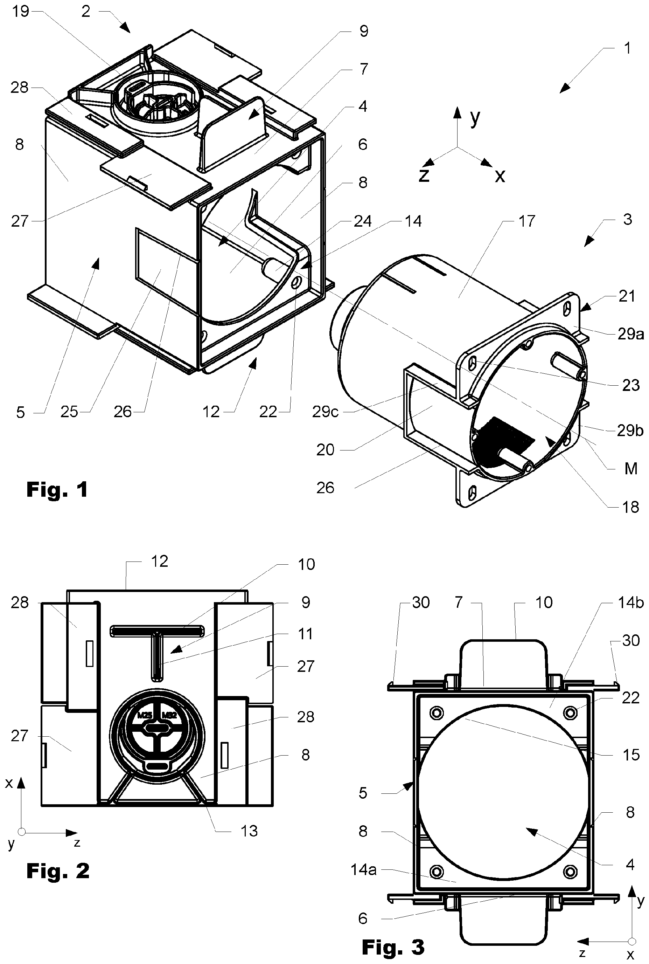

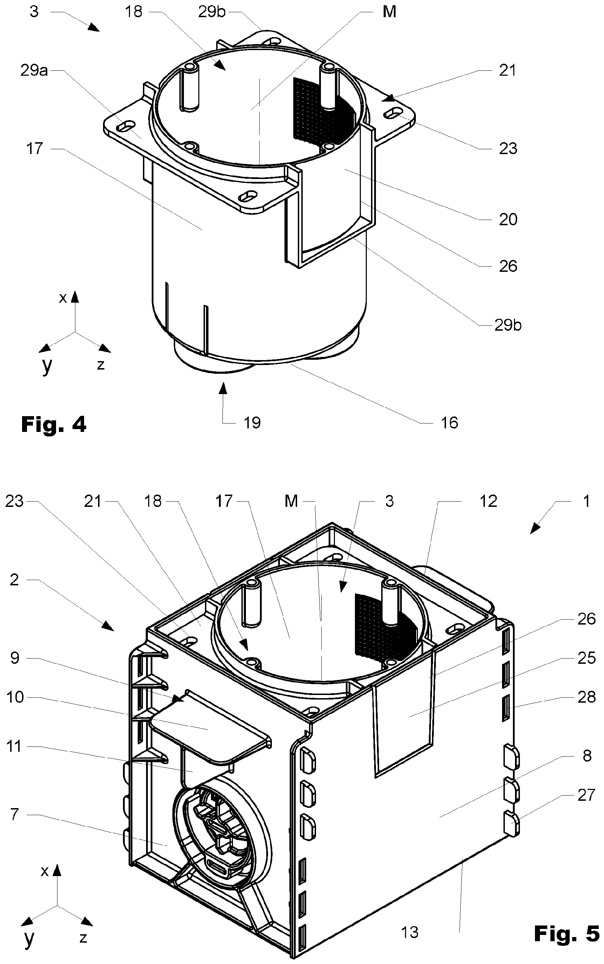

**Figur 1** **-** **Figur 4** zeigen verschiedene Ansichten und Aspekte einer ersten Ausführungsform eines Installationssystems 1 gemäss der Erfindung und **Figur 5** eine zweite Ausführungsform eines Installationssystems 1 gemäss der Erfindung. Beide Ausführungsformen umfassen eine Halterung 2 und eine in diese einsetzbare Installationsdose 3. Die Halterung 2 weist hierbei einen um einen Aufnahmeraum 4 umlaufenden und im Wesentlichen in eine axiale Richtung (x-Richtung) erstreckenden Rahmen 5 auf. Der Rahmen 5 umfasst hierbei eine Bodenplatte 6 und eine bezüglich dem Aufnahmeraum 4 dieser gegenüber angeordneten Deckplatte 7. Zwischen der Bodenplatte 6 und der Deckplatte 7 verlaufen zwei Seitenplatten 8, welche den Aufnahmeraum 4 seitlich begrenzen. Der Rahmen 5 erstreckt sich mit Vorteil von einem vorderseitigen Ende 12 zu einem rückseitigen Ende 13, welches jeweils offen ausgestaltet sein kann, sodass eine durch den Rahmen 5 durchgängige Durchgangsöffnung gebildet wird. Somit ist der Aufnahmeraum 4 von dem vorderseitigen Ende 12 als auch von dem rückseitigen Ende 13 zugänglich. Auf der Bodenplatte 6 und der Deckplatte 7 ist in den gezeigten Ausführungsformen jeweils eine Fussstruktur 9 angeordnet. Andere Anordnungen sind jedoch ebenfalls denkbar. Die Fussstruktur 9 dient hierbei dazu, während der Herstellung der Gebäudewand die Halterung 2 bezüglich einer gedruckten Schicht der Gebäudewand zu positionieren. Die jeweilige Fussstruktur 9 ist in beiden Ausführungsformen gleich ausgestaltet und weist zwei Positionierrippen 10, 11 auf, die dazu ausgelegt sind in das frisch gedruckte Material einer Druckschicht der Gebäudewand einzutauchen um die Halterung 2 in dieser zusätzlich zu verankern. Beide Positionierrippen 10,11 stehen im Wesentlichen senkrecht von einer Aussenseite des Rahmens 5 ab. Eine erste Positionierrippe 10 ist hierbei zudem normal zur axialen Richtung ausgerichtet und eine zweite Positionierrippe 11 in axialer Richtung angeordnet.

Die in die Halterung 2 einsetzbare Installationsdose 3 ist in **Figur 4** gezeigt. Diese weist eine Dosenwand 17 auf, welche in einen Dosenboden 16 übergeht. Gegenüberliegend des Dosenbodens 16 ist eine Installationsöffnung 18 angeordnet. Die Dosenwand 17 umgibt eine Mittelachse M der Installationsdose 3, welche zum Einsetzen der Installationsdose 3 in die Halterung 2 in die axiale Richtung zeigt (vgl. **Figur 1****).** Am Dosenboden 16 weist die gezeigte Installationsdose 3 mindestens eine Einführöffnung zur Zuführung einer Installationsleitung auf (hier nur angedeutet). Diese kann initial von einem heraustrennbaren Einführbereich 19 verschlossen sein. Jedoch kann die Einführöffnung, respektive der heraustrennbare Einführbereich 19 alternativ oder ergänzend ebenfalls in der Dosenwand 17 angeordnet sein. Von der Dosenwand 17 seitlich abragend weist die Installationsdose 3 zudem einen Dosenkragen 21 auf. In einem eingesetzten Zustand der Installationsdose 3 in eine Aufnahmeöffnung 15 der Halterung 2 liegt der Dosenkragen 21 auf einer Schottwand 14 der Halterung 2 auf. Wie aus **Figur 1** ersichtlich ist die Schottwand 14 innerhalb des Rahmens 5 angeordnet. Die Schottwand 14 steht hierbei mit Vorteil senkrecht von einer Innenseite des Rahmens 5 nach innen (d.h. in den Aufnahmeraum 4) ab. Die Schottwand 14 kann in unterschiedliche Bereiche unterteilt werden. Die Bereiche können sowohl normal zur axialen Richtung angeordnet sein, sich in axiale Richtung erstrecken oder winkelig zur axialen Richtung angeordnet sein. Im gezeigten Fall umfasst die Schottwand 14 einen ersten Bereich 14a, der an die Bodenplatte 6 angrenzt und einen zweiten Bereich 14b, der an die Deckplatte 7 angrenzt, wobei der erste und der zweite Bereich 14a, 14b normal zur axialen Richtung angeordnet sind (vgl. **Figur 3****).** Des Weiteren verläuft die Schottwand 14 zumindest bereichsweise in axiale Richtung und um einen heraustrennbaren Rahmenbereich 25 der Seitenplatte 8 herum (wie in **Figur 1** ersichtlich). Der heraustrennbare Rahmenbereich 25 grenzt an das vorderseitige Ende 12 des Rahmens 5 an und kann entlang einer Dünnstelle 26 herausgetrennt werden. Äquivalent zur Schottwand 14, weist ebenfalls der Dosenkragen 21 der Installationsdose 3 mehrere Kragenbereiche 29a, 29b 29c auf, welche in **Figur 4** zu sehen sind. Ein erster und ein diesem in Bezug zur Installationsöffnung gegenüberliegender zweiter Kragenbereich 29a, 29b erstrecken sich in einer Ebene normal zur axialen Richtung. Weitere Kragenbereiche 29c umgeben je einen in der Dosenwand 17 angeordneten heraustrennbaren Dosenbereich 20, welcher an die Installationsöffnung 18 angrenzt. Die jeweiligen Kragenbereiche 29 bilden den Dosenkragen 21 aus, welcher um die Dosenwand 17 umläuft und aus axialer Richtung betrachtet eine Aussenkontur aufweist, die der Innenkontur des Rahmens 5 entspricht.

Wie in **Figur 1** sichtbar, sind in der Schottwand 14 mehrere erste Befestigungsöffnungen 22 (in Form eines Sackloches) zur Befestigung der Installationsdose 3 angeordnet. Zur Ausbildung des Sacklochs ist rückseitig an der Schottwand 14 ein Dom 24 angeordnet. An dem Dosenkragen 21 sind zweite Befestigungsöffnungen 23 angeordnet. Im eingesetzten Zustand der Installationsdose sind die zweiten Befestigungsöffnungen 23 zu den ersten Befestigungsöffnungen 22 koaxial angeordnet. Die Installationsdose 3 kann so durch Befestigungselemente (nicht gezeigt) mit der Halterung 2 wirkverbunden werden, indem diese durch die zweiten Befestigungsöffnungen 23 in die ersten Befestigungsöffnungen 22 geführt und dort form- und/oder kraftschlüssig verbunden werden.

Um zwei baugleiche Halterungen miteinander seitlich wirkzuverbinden kann die Halterung Verbindungsstrukturen 27, 28 umfassen. In beiden Ausführungsformen sind erste und zweite Verbindungsstrukturen 27, 28 vorhanden, welche je derart ausgelegt sind, dass diese miteinander wirkverbunden, insbesondere ineinander gesteckt, werden können. Die ersten und zweiten Verbindungsstrukturen 27, 28 sind hierbei jeweils an den vier Kanten des Rahmens 5 angeordnet. Die beiden an die Deckplatte 7 angrenzenden Kanten weisen hierbei jeweils gegenüberliegende erste und zweite Verbindungsstrukturen 27,28 auf. Ebenfalls weisen die entsprechenden Kanten angrenzend an die Bodenplatte 6 je paarweise gegenüberliegende erste und zweite Verbindungsstrukturen 27, 28 auf. Die Ausführung der Verbindungsstrukturen der ersten Ausführungsform unterscheidet sich von denen der zweiten Ausführungsform dadurch, dass die Verbindungsstrukturen der ersten Ausführungsform zusätzliche Rastelemente 30 vorsehen, mittels denen baugleiche Halterungen 2 miteinander verrasted werden können (siehe Figur 3).

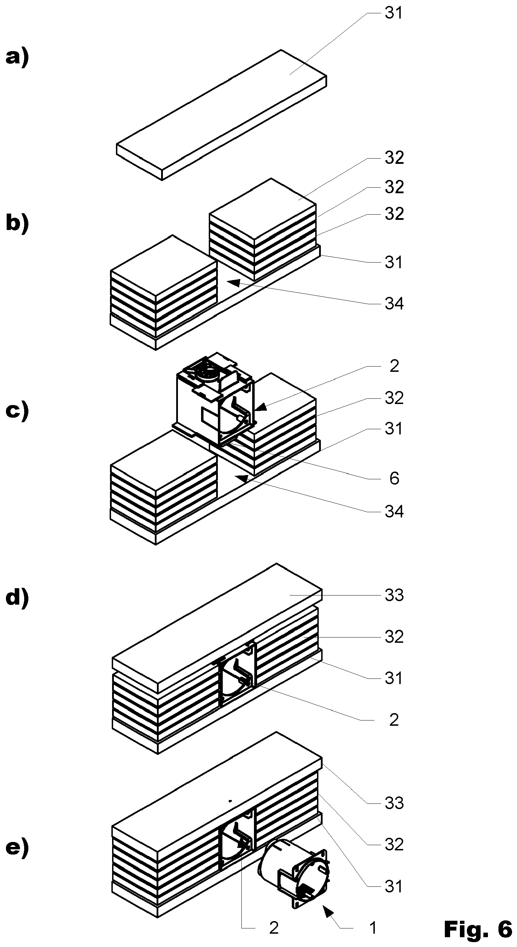

**Figur 6** illustriert schematisch ein Verfahren zum Herstellen einer 3D gedruckten Gebäudewand, welche ein Installationssystem 1 für elektrotechnische Installationen beinhaltet. **Figur 6a** zeigt hierbei eine gedruckte Basisschicht 31 einer Gebäudewand. Auf die Basisschicht 31 werden mehrere Zwischenschichten 32 gedruckt, welche gemeinsam eine Aussparung für die Halterung 2, wie zuvor beschrieben, vorsehen (siehe **Figur 6b****).** (Alternativ kann ebenfalls auch erst die Halterung mit der Bodenplatte auf der Basisschicht positioniert werden und anschliessend können die Zwischenschichten um diese herum gedruckt werden.) Anschliessend wird eine zuvor bereitgestellte Halterung 2 mit der Bodenplatte 6 auf der Basisschicht 31 und in der Aussparung 34 positioniert (siehe **Figur 6c****).** Hierbei schliessen die mehrerer Zwischenschichten 32 mit Vorteil bündig mit der Deckplatte 7 der Halterung 2 ab. Die Positionierung kann durch eine robotische Positioniereinheit geschehen. Je nach Ausgestaltung der Halterung 2 kann bei der Positionierung zudem die zuvor beschriebene Fussstruktur 9 in der Basisschicht 31 eintauchen und die Halterung 2 so in der Gebäudewand verankern. Nach dem Positionieren wird eine Deckschicht 33 gedruckt, welche eine der Bodenplatte 6 in Bezug zum Aufnahmeraum 4 gegenüberliegende Deckplatte 7 der Halterung 2 überspannt (siehe **Figur 6d****).** Anschliessend wird die Installationsdose 3 in die Halterung 2 eingesetzt und mit dieser wirkverbunden (siehe **Figur 6e****).** Je nach Wandbeschaffenheit kann die Position der Installationsdose 3 in normaler Richtung einer Oberfläche der gedruckten Gebäudewand vor dem Wirkverbinden der Installationsdose 3 mit der Halterung 2 verschoben/ justiert werden.

**LISTE DER BEZUGSZEICHEN**

| | | | |
|---|---|---|---|
| 1 | Installationssystem | 18 | Installationsöffnung |
| 2 | Halterung | 19 | Einführbereich |
| 3 | Installationsdose | 20 | Dosenbereich |
| 4 | Aufnahmeraum | 21 | Dosenkragen |
| 5 | Rahmen | 22 | Erste Befestigungsöffnung |
| 6 | Bodenplatte | 23 | Zweite Befestigungsöffnung |
| 7 | Deckplatte | 24 | Dom |
| 8 | Seitenplatte | 25 | Rahmenbereich |
| 9 | Fussstruktur | 26 | Dünnstelle |
| 10 | Erste Positionierrippe | 27 | Erste Verbindungsstruktur |
| 11 | Zweite Positionierrippe | 28 | Zweite Verbindungsstruktur |
| 12 | Vorderseitiges Ende | 29 | Kragenbereich |
| 13 | Rückseitiges Ende | 30 | Rastelemente |
| 14 | Schottwand | 31 | Basisschicht |
| 15 | Aufnahmeöffnung | 32 | Zwischenschicht |
| 16 | Dosenboden | 33 | Deckschicht |
| 17 | Dosenwand | 34 | Aussparung |

## Patentansprüche

1. Installationssystem (1) umfassend eine Halterung (2) und eine in diese einsetzbare Installationsdose (3) für elektrotechnische Installationen in 3D-gedruckten Gebäudewänden, wobei
a. die Halterung (2) einen um einen Aufnahmeraum (4) umlaufenden und im Wesentlichen in eine axiale Richtung erstreckenden Rahmen (5) aufweist, welcher eine Bodenplatte (6) und eine bezüglich dem Aufnahmeraum (4) dieser gegenüber angeordneten Deckplatte (7), sowie zwei zwischen der Bodenplatte (6) und der Deckplatte (7) verlaufende und den Aufnahmeraum (4) seitlich begrenzende Seitenplatten (8) aufweist; und
b. die Halterung (2) weiter mindestens eine Fussstruktur (9) aufweist, die dazu dient während der Herstellung der Gebäudewand die Halterung (2) bezüglich einer gedruckten Schicht der Gebäudewand zu positionieren.

2. Installationssystem (1) gemäss Patentanspruch 1, **dadurch gekennzeichnet, dass** die Fussstruktur (9) an der Bodenplatte (6) und/oder der Deckplatte (7) angeordnet ist.

3. Installationssystem (1) gemäss einem der vorangehenden Patentansprüche, **dadurch gekennzeichnet, dass** die Fussstruktur (9) mindestens eine Positionierrippe (10, 11) aufweist, die dazu ausgelegt ist in das frisch gedruckte Material der Schicht der Gebäudewand einzutauchen um die Halterung (2) in dieser zu fixieren.

4. Installationssystem (1) gemäss Patentanspruch 3, **dadurch gekennzeichnet, dass** die mindestens eine Positionierrippe (10) zumindest bereichsweise normal zur axialen Richtung angeordnet ist.

5. Installationssystem (1) gemäss einem der vorangehenden Patentansprüche, **dadurch gekennzeichnet, dass** die Halterung (2) eine Schottwand (14) zur Auflage eines Dosenkragens (21) der Installationsdose (3) aufweist, wobei die Schottwand (14) innerhalb des Rahmens (5) angeordnet ist und eine Aufnahmeöffnung (15) zum Einsetzen der Installationsdose (3) aufweist.

6. Installationssystem (1) gemäss Patentanspruch 5, **dadurch gekennzeichnet, dass** die Schottwand (14) in Bezug zu einem vorderseitigen Ende (12) des Rahmens (5) nach hinten versetzt angeordnet ist.

7. Installationssystem (1) gemäss Patentanspruch 5 oder 6, **dadurch gekennzeichnet, dass** die Schottwand (14) mehrere in axialer Richtung zueinander versetzt angeordnete Bereiche umfasst.

8. Installationssystem (1) gemäss einem der vorangehenden Patentansprüche, **dadurch gekennzeichnet, dass** das Installationssystem (1) eine Dichtung zum Abdichten der Installationsdose (3) gegen die Halterung (2) umfasst.

9. Installationssystem (1) gemäss Patentanspruch 5 und 8, **dadurch gekennzeichnet, dass** die Dichtung zwischen dem Dosenkragen (21) und der Schottwand (14) angeordnet ist und die Aufnahmeöffnung (15) umgibt.

10. Installationssystem (1) gemäss Patentanspruch 8 oder 9, **dadurch gekennzeichnet, dass** die Dichtung an der Installationsdose (3) oder der Halterung (2) angeformt ist.

11. Installationssystem (1) gemäss einem der vorangehenden Patentansprüche, **dadurch gekennzeichnet, dass** die Installationsdose (3) mit der Halterung (2) in mindestens einer Position derart wirkverbindbar ist, dass ein vorderseitiger Rand der Installationsdose (3) in axialer Richtung bündig mit dem Rahmen (5) abschliesst oder über diesen hinausragt.

12. Installationssystem (1) gemäss Patentanspruch 11, **dadurch gekennzeichnet, dass** die Installationsdose (3) mit der Halterung (2) in mehreren Positionen wirkverbindbar ist, wobei der vorderseitiger Rand der Installationsdose (3) in den jeweiligen Positionen in axialer Richtung unterschiedliche Abständen zu dem Rahmen (5) aufweist.

13. Installationssystem (1) gemäss einem der vorangehenden Patentansprüche, **dadurch gekennzeichnet, dass** die Halterung (2) mindestens einen seitlich abragenden Flügel aufweist, der derart ausgelegt ist, dass dieser zwischen zwei gedruckten Schichten der Gebäudewand anordnenbar ist.

14. Installationssystem (1) gemäss einem der vorangehenden Patentansprüche, **dadurch gekennzeichnet, dass** die Halterung (2) mindestens eine Verbindungsstruktur (27, 28) zum Wirkverbinden der Halterung (2) mit einer weiteren Halterung (2) aufweist.

15. Installationssystem (1) gemäss einem der vorangehenden Patentansprüche, **dadurch gekennzeichnet, dass** die Halterung (2) einen Datenträger, insbesondere einen einlesbaren Barcode oder einen RFID Chip, umfasst.

16. Installationssystem (1) gemäss einem der vorangehenden Patentansprüche, **dadurch gekennzeichnet, dass** die Halterung (2) oder die Installationsdose (3) eine Positionsmarke umfasst.

17. Verfahren zum Herstellen einer 3D gedruckten Gebäudewand, welche ein Installationssystem (1) für elektrotechnische Installationen beinhaltet, das Verfahren umfassend die folgenden Verfahrensschritte:
a. Bereitstellen des Installationssystems (1), umfassend eine Halterung (2) und eine in einen Aufnahmeraum (4) der Halterung (2) einsetzbare Installationsdose (3);
b. Drucken einer Basisschicht (31) einer Gebäudewand;
c. Positionieren einer Bodenplatte (6) der Halterung (2) auf der Basisschicht (31);
d. Drucken einer Deckschicht (33) der Gebäudewand, welche eine der Bodenplatte (6) in Bezug zum Aufnahmeraum (4) gegenüberliegende Deckplatte (7) der Halterung (2) überspannt;
e. Einsetzen der Installationsdose (3) in die Halterung (2);
f. Wirkverbinden der Installationsdose (3) mit der Halterung (2).

18. Verfahren gemäss Patentanspruch 17, das Verfahren weiter umfassend Drucken mindestens einer Zwischenschicht (32) vor dem Aufsetzen der Halterung (2) auf der Basisschicht (31), welche eine Aussparung (34) für die Halterung (2) vorsieht.

19. Verfahren gemäss Patentanspruch 18, das Verfahren weiter umfassend das Drucken mehrerer Zwischenschichten (32) bis die Zwischenschichten (32) bündig mit der Deckplatte (7) der Halterung (2) abschliessen.

20. Verfahren gemäss einem der vorangehenden Patentansprüche 17 - 19, das Verfahren weiter umfassend das Positionieren der Halterung (2) durch eine robotische Positioniereinheit.

21. Verfahren gemäss einem der vorangehenden Patentansprüche 17 - 20, das Verfahren weiter umfassend das Positionieren der Bodenplatte (6) auf der Basisschicht (31) mittels einer auf der Bodenplatte (6) angeordneten Fussstruktur (9), welche in die Basisschicht (31) eintaucht und die Halterung (2) in der Gebäudewand verankert.

22. Verfahren gemäss einem der vorangehenden Patentansprüche 17 - 21, wobei die mindestens eine Basisschicht (31) und/oder Deckschicht (33) einen Ausschnitt für die Zuführung eines Installationsrohrs in die Installationsdose (3) vorsieht.

23. Verfahren gemäss einem der vorangehenden Patentansprüche 17 - 22, das Verfahren weiter umfassend das Verschieben der Position der Installationsdose (3) in normaler Richtung einer Oberfläche der gedruckten Gebäudewand vor dem Wirkverbinden der Installationsdose (3) mit der Halterung (2).

24. Verfahren gemäss einem der vorangehenden Patentansprüche 17 - 23, das Verfahren weiter umfassend das Einlesen eines Datenträgers des Elektroinstallationssystems (1) und Abrufen von hinterlegten Daten bezogen auf die vorgesehene Elektroinstallation.

25. Verfahren gemäss einem der vorangehenden Patentansprüche 17 - 24, wobei das Installationssystem (1) zwei aneinander angrenzend und miteinander wirkverbundene Halterungen (2) mit jeweils darin einsetzbaren Installationsdosen (3) umfasst, welche gemeinsam nach dem Drucken der Basisschicht (31) auf dieser positioniert werden, und die Deckschicht (33) die zwei wirkverbundenen Halterungen (2) nach dem Drucken der Deckschicht (33) überspannt.

26. Verfahren gemäss Patentanspruch 18 und 25, wobei die Aussparung (34) der mindestens einen Zwischenschicht (32) dazu ausgelegt ist die zwei miteinander wirkverbundenen Halterungen (2) aufzunehmen.
